# FASCICULE DE BREVET EUROPEEN

(11) **EP 0 581 389 B1**
(45) Date de publication et mention de la délivrance du brevet: **11.06.1997**
(21) Numéro de dépôt: 93202251.0
(22) Date de dépôt: 29.07.1993
(51) Int. Cl.: B60J 10/06, B60J 10/04

(54) **Ensemble d'habillage de portière**
Formteil für Tür
Door trimming

(30) Priorité: 29.07.1992 FR 9209390
(43) Date de publication de la demande: 02.02.1994
(73) Titulaire: TECHNISTAN, 92400 Courbevoie (FR)
(72) Inventeur: Levy, Claude, F-78800 Houilles (FR); Opman, Pierre, F-92200 Neuilly sur Seine (FR); Smadja, Jean-Claude, F-92200 Neuilly sur Seine (FR)
(74) Mandataire: Dronne, Guy

(56) Documents cités:
- EP-A- 0 333 993
- EP-A- 0 376 764
- EP-A- 0 380 398
- EP-A- 0 384 852
- EP-A- 0 412 782

## Description

La présente invention concerne un ensemble d'habillage en une seule pièce prêt à monter sur une portière de véhicule automobile ainsi qu'un procédé de fabrication d'un tel ensemble.

Jusqu'à présent, les divers éléments d'habillage d'une portière étaient montés séparément. C'est le cas notamment pour le montant de vitre mobile, la coulisse de vitre mobile, la bande d'étanchéité horizontale formant lécheur de bas de vitre mobile ainsi que le panneau fixe ou la vitre fixe dont le pourtour est généralement pourvu d'un joint d'étanchéité. Or, tous ces éléments possèdent des cotes plus ou moins précises du fait de la dispersion de fabrication.

Le EP-A-0 380 398 (Mesnel) décrit un ensemble modulaire de custode comprenant un joint d'étanchéité périphérique enserrant un panneau fixe de custode relié à un montant et à des coulisses supérieure et verticale. Chacun des éléments de cet ensemble (joint périphérique, coulisse et montant) est constitué dans une section transversale d'une partie intérieure et d'une partie extérieure pourvues de moyens de fixation sur la feuillure et de moyens d'étanchéité. Cependant, les tronçons respectifs du joint périphérique d'encadrement de la custode, des coulisses ainsi que du montant, sont extrudés séparément, découpés à des longueurs déterminées avant d'être montés sur la custode (pour le joint périphérique et le montant) puis placés dans un moule où est réalisée la liaison entre eux, par moulage des parties d'angle.

Dans ces conditions, l'assemblage des éléments extrudés est complexe et le montage des dits éléments est hyperstatique, ce qui pose des problèmes d'ajustement nécessitant une intervention manuelle qui est longue et laborieuse.

En effet, c'est le pincement du joint périphérique de vitre fixe par emboîtement dans le cadre de portière qui provoque le placage des lèvres latérales sur ladite vitre pour l'enserrer et obtenir ainsi l'étanchéité du système.

De plus, la dispersion des dimensions et les défauts de fabrication pour chacun des éléments ont des conséquences néfastes sur l'étanchéité et sur l'aspect esthétique de l'ensemble.

La présente invention a pour but de résoudre ces problèmes techniques de manière satisfaisante.

Ce but est atteint, conformément à l'invention au moyen d'un ensemble d'habillage de portière de véhicule automobile comprenant un joint d'étanchéité périphérique enserrant un panneau fixe relié, d'une part, à un montant , et d'autre part, à une coulisse de vitre mobile et/ou à au moins une bande d'étanchéité inférieure formant lécheur de vitre mobile, ledit lécheur, ladite coulisse et ledit joint périphérique étant eux-mêmes constitués, dans une section transversale, d'un seul tenant, d'une partie intérieure et d'une partie extérieure pourvues de moyens d'étanchéité et de fixation sur la feuillure (Ensemble d'habillage tel que divulgué dans EP-A-0 380 398), caractérisé en ce que ledit ensemble est constitué d'une seule pièce moulée intégralement et directement sur et autour dudit montant.

Selon un mode de réalisation avantageux de l'invention, ledit montant comporte à son extrémité inférieure et éventuellement, à son extrémité supérieure des pattes de fixation à la paroi interne de la portière.

Selon un mode de réalisation, ledit joint d'étanchéité périphérique dudit panneau fixe est solidaire, sur l'un de ses côtés, dudit montant.

Selon un autre mode de réalisation ladite bande d'étanchéité inférieure est reliée audit joint d'étanchéité de panneau fixe et/ou la partie inférieure dudit montant par une articulation élastique.

Selon encore un autre mode de réalisation, ledit ensemble comprend une bande d'étanchéité inférieure destinée à être montée à l'extérieur de l'habitacle et une bande d'étanchéité inférieure destinée à être montée à l'intérieur dudit habitacle par rapport à ladite vitre mobile.

Selon encore un autre mode de réalisation avantageux de l'invention, ledit joint périphérique, de panneau fixe comporte sur son pourtour extérieur des lèvres courtes souples pour faciliter le montage et l'accrochage sur la feuillure de portière ainsi que des lèvres d'étanchéité latérales.

Un autre objet de l'invention est un procédé de fabrication de l'ensemble d'habillage de portière de véhicule automobile du type mentionné ci-dessus.

Ce procédé est caractérisé en ce que on moule directement et simultanément sur un montant dormant de vitre mobile au moins une bande d'étanchéité inférieure formant lécheur de vitre mobile , une coulisse de vitre mobile et un joint d'étanchéité périphérique enserrant éventuellement un panneau fixe, ledit lécheur, ladite coulisse et ledit joint périphérique étant eux-mêmes réalisés avec une section transversale moulée d'un seul tenant et pourvue d'une partie intérieure et d'une partie extérieure destinées à assurer l'étanchéité et la fixation sur la feuillure de portière.

L'invention permet un habillage rapide et automatique de la portière par montage d'un ensemble en une seule pièce. Le surmoulage du joint d'étanchéité périphérique directement sur la vitre fixe permet d'obtenir une étanchéité satisfaisante dès la fabrication. Les lèvres d'étanchéité latérales n'assurent que l'étanchéité entre le joint périphérique et le cadre de la portière. Ces lèvres accessoires étant souples permettent un positionnement plus précis de l'ensemble et suppriment les déformations dues aux compressions ou aux élongations du joint périphérique.

De plus, l'ensemble de l'invention permet une uniformisation du style par le choix des mêmes éléments constitutifs. L'étanchéité globale ainsi que l'isolation acoustique sont accrues et ceci d'autant plus que le montant de vitre coulissante peut être protégé en étant recouvert dès la fabrication de l'ensemble par un matériau isolant.

Encore un autre avantage découle du fait que les éléments constitutifs de l'ensemble sont rapportés par moulage et peuvent donc posséder des caractéristiques (dureté, rigidité, teinte ...) diverses et variées.

L'invention sera mieux comprise à la lecture de la description qui va suivre accompagnés des dessins sur lesquels :
- la figure 1 représente une vue de côté d'un ensemble d'habillage selon l'invention, monté sur une portière P arrière de véhicule. ;
- la figure 2 est une vue en coupe, au niveau du montant de l'ensemble de la figure 1 ;
- la figure 3 est une vue en coupe au niveau du joint de vitre fixe de l'ensemble de la figure 1 ;
- la figure 4 représente un autre mode de réalisation de l'ensemble d'habillage selon l'invention ;
- les figures 5a, 5b et 5c représentent encore d'autres modes de réalisation de l'invention ;
- les figures 6a et 6b représentent des vues de détail de l'ensemble de l'invention ;
- la figure 7 est une vue en, coupe au niveau de la coulisse prévue sur les figures 5a à 5c ; et,
- la figure 8 est une vue en coupe au niveau de la bande d'étanchéité formant lécheur.

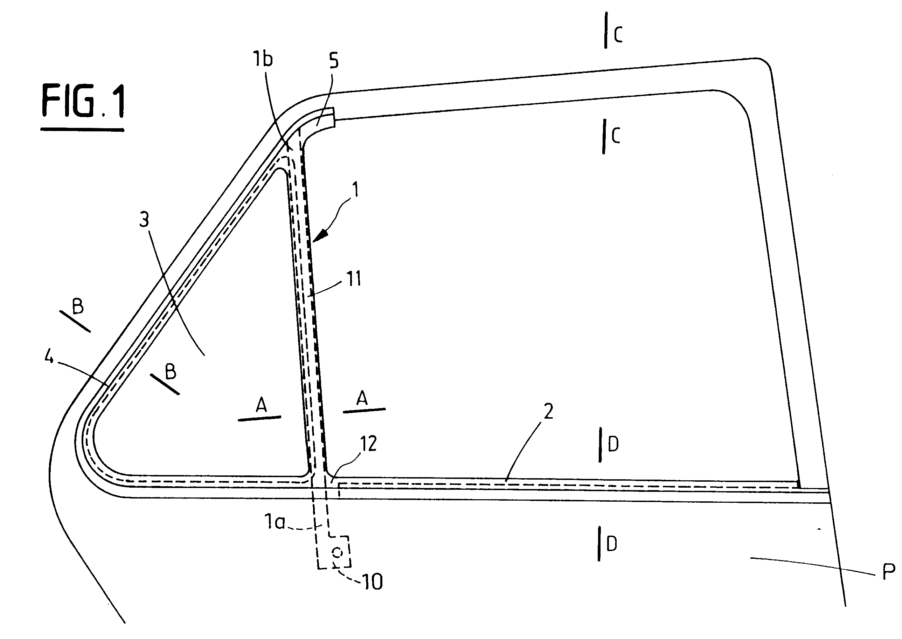

L'ensemble d'habillage représenté sur la figure 1 comprend en une seule pièce un montant dormant 1 de vitre coulissante (non représentée), une bande d'étanchéité 2 sensiblement horizontale formant lécheur de vitre coulissante, un panneau de vitre fixe 3 garnie sur son bord périphérique d'un joint d'étanchéité 4 solidaire sur son bord intérieur dudit montant 1.

La partie inférieure du montant dormant 1 s'étend vers le bas en dessous du niveau de la bande 2 pour s'insérer dans la doublure de la portière.

Le montant dormant 1 comporte à son extrémité inférieure 1a et éventuellement à son extrémité supérieure 1b des pattes de fixation 10 à la paroi interne de la doublure de portière P.

L'ensemble peut être adapté pour être monté soit sur une porte avant, dans ce cas le panneau fixe est alors un support gousset (cache plastique) de rétroviseur, une vitre fixe avant ou les deux ; soit sur une porte arrière de véhicule et dans ce dernier cas, le panneau fixe est une vitre de custode ou un enjoliveur gousset.

La bande 2, la vitre fixe 3 et le joint d'étanchéité périphérique 4 sont réunis par moulage autour et avec le montant dormant 1.

De manière avantageuse, la liaison entre la bande 2 et ledit joint périphérique 4 et/ou le montant 1 comporte une articulation souple et élastique 12 pour faciliter le montage en autorisant un débattement de la bande 2.

Le montage de l'ensemble s'effectue alors par emboîtement de la partie inférieure du montant 1 dans la doublure de portière P et placage puis translation de l'ensemble dans le triangle avant ou arrière de la porte.

Le montant 1 peut être protégé par un revêtement de finition extérieur 11 obtenu par surmoulage direct au moment de la fabrication de l'ensemble avec intégration éventuelle d'un insert de renfort.

L'ensemble de l'invention représenté sur la figure 1 comprend également un cache 5 pour le raccord ultérieur au montage avec la coulisse supérieure de vitre coulissante lorsque celle-ci est réalisée sous forme indépendante.

Le cache 5 est constitué d'une languette recouvrant les bords jointifs du montant 1 et de la coulisse supérieure.

Le triangle avant du panneau fixe 3 pourra être muni d'un élément de fixation d'un rétroviseur extérieur ou bien le montant 1 constituera lui-même un support de rétroviseur (voir figure 5c).

L'aspect des profilés surmoulés sera uniformisé par traitement préalable des moules de fabrication.

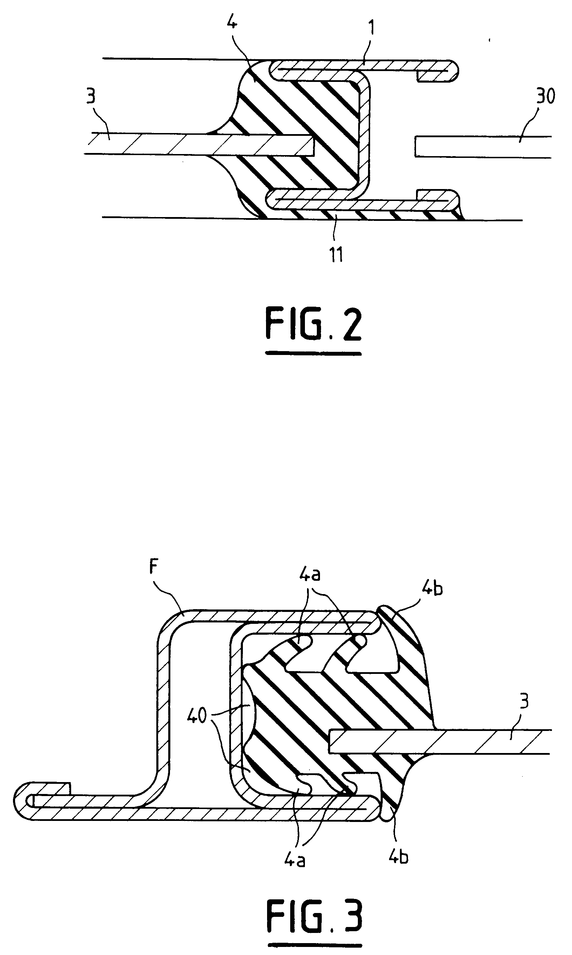

La figure 2 représente une vue en coupe selon AA, au niveau du montant 1, de l'ensemble de la figure 1.

L'ensemble comprend à cet endroit, le montant dormant 1 pourvu sur sa face extérieure à l'habitacle du véhicule, du revêtement de finition 11 et solidaire du côté de la vitre fixe 3 du joint d'étanchéité périphérique 4 enserrant ladite vitre fixe 3 et encadre de l'autre côté le bord vertical avant de la vitre coulissante 30.

La figure 3 représente une vue en coupe selon BB, au niveau du joint d'étanchéité périphérique 4 de la vitre fixe 3.

Ledit joint d'étanchéité 4 comporte sur son pourtour extérieur des lèvres courtes souples 4a pour faciliter le montage et l'accrochage sur la feuillure F de la portière P et des lèvres latérales 4b renforçant l'étanchéité. Les espaces 4a compris entre les différentes lèvres 4a,4b définissent des zones tampon pour arrêter ou limiter la propagation des ondes acoustiques en procurant ainsi une meilleure isolation acoustique de l'habitacle.

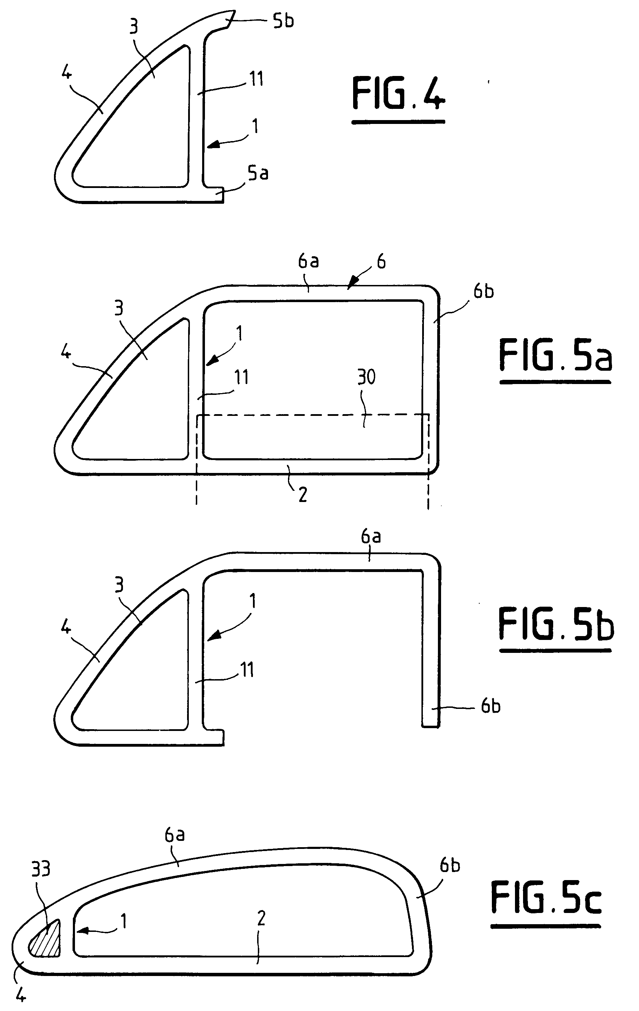

La figure 4 représente un autre mode de réalisation de l'ensemble d'habillage de l'invention comprenant seulement un montant 1 avec son revêtement de finition 11, un joint d'étanchéité périphérique 4 enserrant une vitre fixe 3 et des caches inférieur 5a et supérieur 5b pour les raccords avec respectivement un lécheur et une coulisse supérieure de vitre mobile.

Le lécheur et la coulisse supérieure sont alors réalisés sous forme indépendante de l'ensemble d'habillage représenté et montés séparément.

La figure 5a représente encore un autre mode de réalisation comprenant toujours en une seule pièce un montant 1 avec son revêtement de finition 11, un joint d'étanchéité périphérique 4 enserrant une vitre fixe 3 une coulisse 6 de vitre coulissante 30 et une bande d'étanchéité inférieure 2 formant lécheur de vitre coulissante.

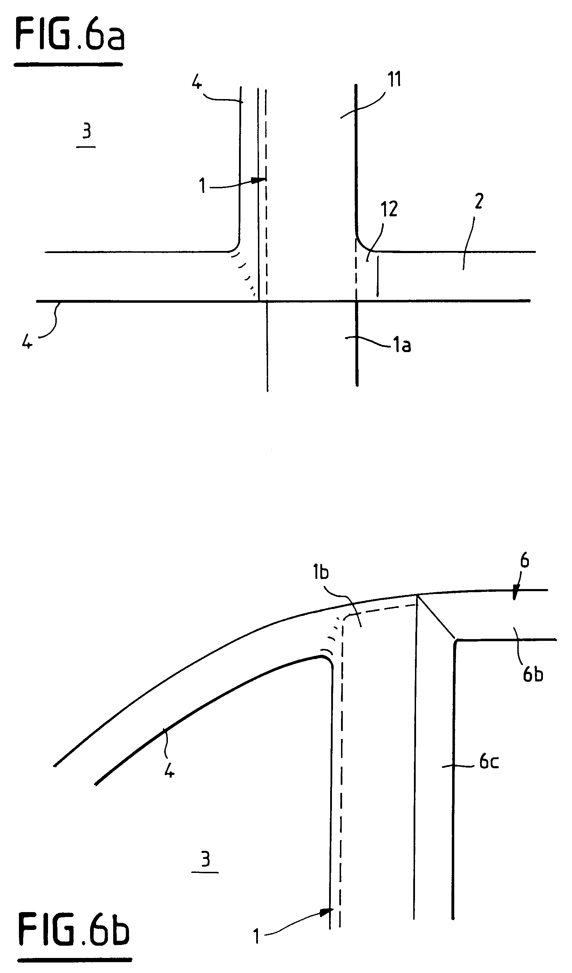

La coulisse 6 comprend un tronçon supérieur 6a et un tronçon latéral 6b. On peut également prévoir que la coulisse 6 possède un autre tronçon latéral 6c symétrique du tronçon 6b engagé dans la partie correspondante du montant 1 pour renforcer l'étanchéité entre le bord latéral de la vitre coulissante 30 et ledit montant 1 (voir figure 6b).

La figure 5b correspond à un mode de réalisation sensiblement identique à celui de la figure 5a mais sans la bande d'étanchéité inférieure.

La figure 5c correspond à un mode de réalisation avec un panneau fixe 33 de dimensions réduites, destiné essentiellement à la fixation d'un organe de rétroviseur.

Dans ce dernier cas, le montant 1 peut être réalisé avec le même matériau que ledit panneau 33 voire de façon monobloc avec lui.

Les figures 6a et 6b représentent des vues de détail avec les liaisons respectivement entre la partie inférieure 1a et la partie supérieure 1b du montant 1 et les autres éléments comoulés décrits précédemment.Sur les figures 6a et 6b, il apparaît que l'aspect extérieur des liaisons ne présente aucun défaut ou irrégularité du fait de l'assemblage en une seule pièce par surmoulage sur le montant 1 de tous les éléments 2,4,6,11.

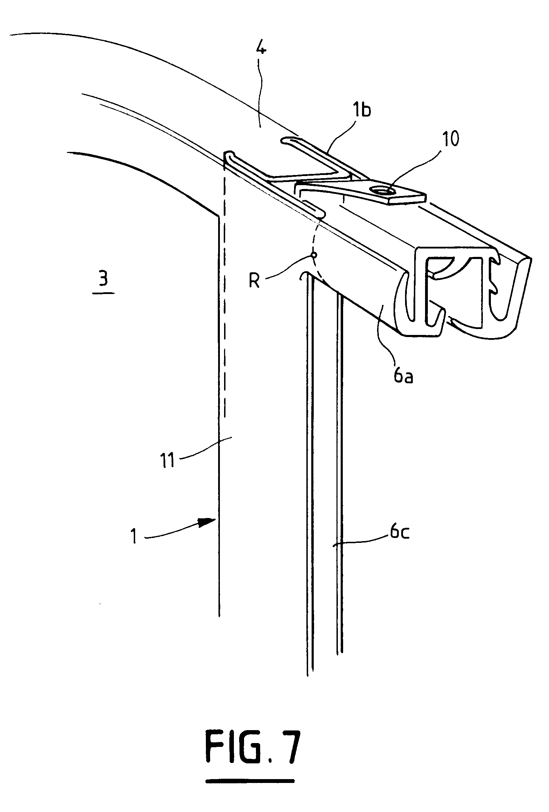

La figure 7 représente une vue en coupe selon CC de la coulisse 6 au niveau du tronçon supérieur 6a.

La section transversale de la coulisse 6 présente un profil classique et la partie supérieure 1b du montant 1 comporte une patte de fixation 10..

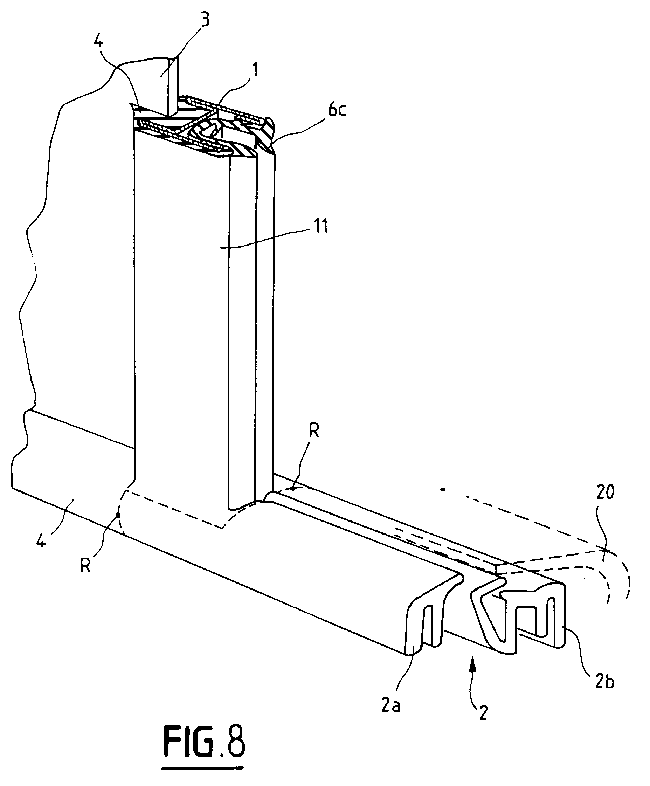

Sur les figures 7 et 8 apparaissent en traits interrompus les raccords de liaison R entre les divers éléments comoulés

La figure 8 représente une vue en coupe selon DD des bandes d'étanchéité inférieure 2a et 2b formant lécheurs de vitre coulissante. La bande 2a est destinée à être montée à l'extérieur de l'habitacle tandis que la bande 2b est destinée à être montée à l'intérieur dudit habitacle. La vitre coulissante 30 se déplace alors entre les bandes 2a et 2b et à leur contact.

La bande 2b peut recevoir de façon superposée une garniture interne d'habillage 20.

Les sections transversales des bandes 2a et 2b présentent des profils classiques.

## Revendications

1. Ensemble d'habillage de portière de véhicule automobile comprenant, un joint d'étanchéité périphérique (4) enserrant un panneau fixe (3) relié, d'une part, à un montant (1), et d'autre part, à une coulisse (6) de vitre mobile et/ou à au moins une bande d'étanchéité inférieure (2, 2a, 2b) formant lécheur de vitre mobile (30), ledit lécheur, ladite coulisse et ledit joint périphérique étant eux-mêmes constitués, dans une section transversale, d'un seul tenant, d'une partie intérieure et d'une partie extérieure pourvues de moyens d'étanchéité et de fixation sur la feuillure, caractérisé en ce que ledit ensemble est constitué d'une seule pièce moulée intégralement et directement sur et autour dudit montant (1).

2. Ensemble selon la revendication 1, caractérisé en ce que ledit joint d'étanchéité périphérique (4) dudit panneau fixe (3) est solidaire, sur l'un de ses côtés, dudit montant (1).

3. Ensemble selon l'une des revendications précédentes, caractérisé en ce que ledit montant (1) comporte à son extrémité inférieure (1a) et, éventuellement à son extrémité supérieure (1b) des pattes de fixation (10) à la paroi interne de la portière (P).

4. Ensemble selon l'une des revendications précédentes, caractérisé en ce que ladite bande d'étanchéité inférieure (2) est reliée audit joint d'étanchéité (4) de panneau fixe (3) et/ou à la partie inférieure dudit montant (1) par une articulation élastique (12).

5. Ensemble selon l'une des revendications précédentes, caractérisé en ce qu'il comprend une bande d'étanchéité inférieure (2a) destinée à être montée à l'extérieur de l'habitacle et une bande d'étanchéité inférieure (2b) destinée à être montée à l'intérieur dudit habitacle par rapport à ladite vitre mobile (30).

6. Ensemble selon l'une des revendications précédentes, caractérisé en ce que ledit montant (1) est un montant dormant.

7. Ensemble selon l'une des revendications 1 à 5, caractérisé en ce que ledit panneau fixe (3) forme un support de rétroviseur.

8. Ensemble selon l'une des revendications précédentes, caractérisé en ce que ledit panneau fixe (3) est une vitre de custode.

9. Ensemble selon l'une des revendications précédentes, caractérisé en ce qu'il comprend en outre des caches (5) de raccords constitués de languettes recouvrant les bords jointifs des éléments raccordés et/ou un revêtement de finition (11) pour ledit montant (1).

10. Ensemble selon l'une des revendications précédentes, caractérisé en ce que ladite coulisse (6) de vitre mobile (30) comprend au moins deux tronçons (6a,6b,6c) coopérant respectivement avec le bord supérieur et au moins l'un des bords latéraux de ladite vitre mobile (30).

11. Ensemble selon l'une des revendications précédentes, caractérisé en ce que ladite coulisse (6) comprend un tronçon (6c) solidaire dudit montant (1).

12. Ensemble selon l'une des revendications précédentes, caractérisé en ce que ledit joint périphérique (4), de panneau fixe (3) comporte sur son pourtour extérieur des lèvres courtes souples (4a) pour faciliter le montage et l'accrochage sur la feuillure (F) de portière (P) ainsi que des lèvres d'étanchéité latérales (4b).

13. Procédé de fabrication d'un ensemble d'habillage de portière de véhicule automobile selon l'une des revendications précédentes, caractérisé en ce que on moule directement et simultanément sur un montant dormant de vitre mobile au moins une bande d'étanchéité inférieure (2, 2a, 2b) formant lécheur de vitre mobile (30), une coulisse (6) de vitre mobile et un joint d'étanchéité périphérique (4) enserrant éventuellement un panneau fixe (3), ledit lécheur, ladite coulisse et ledit joint périphérique étant eux-mêmes réalisés avec une section transversale moulée d'un seul tenant et pourvue d'une partie intérieure et d'une partie extérieure destinées à assurer l'étanchéité et la fixation sur la feuillure de portière.

## Claims

1. An automobile vehicle door trim assembly, comprising a peripheral seal (4) tightening on a fixed panel (3) that is connected, on the one hand, to an upright (1) and, on the other hand, to a mobile window run channel (6) and/or to at least one lower sealing band (2, 2a, 2b) forming mobile window scraper (30), said scraper, said run channel and said peripheral seal being themselves constituted, in a transverse section, in one piece, by an inside part and an outside part provided with sealing and fastening means on the rabbet, characterized in that said assembly is constituted in one piece that is directly moulded in full on or about said upright (1).

2. The assembly according to claim 1, characterized in that said peripheral seal (4) of said fixed panel (3) is fast on one of its sides with said upright (1).

3. The assembly according to one of the preceding claims, characterized in that said upright (1) comprises at its lower end (1a) and possibly, at its upper end (1b), fastenings (10) for fixation to the inner wall of the door (P).

4. The assembly according to one of the preceding claims, characterized in that said lower sealing band (2) is connected to said seal (4) of fixed panel (3) and/or to the lower part of said upright (1) by an elastic articulation (12).

5. The assembly according to one of the preceding claims, characterized in that it comprises a lower sealing band (2a) intended to be mounted outside the car interior and a lower sealing band (2b) intended to be mounted inside said car interior with respect to said mobile window (30).

6. The assembly according to one of the preceding claims, characterized in that said upright (1) is a fixed upright.

7. The assembly according to one of claims 1 to 5, characterized in that said fixed panel (3) forms a rearview mirror support.

8. The assembly according to one of the preceding claims, characterized in that said fixed panel (3) is a non-opening side window.

9. The assembly according to one of the preceding claims, characterized in that it further comprises connection covers (5) constituted by tongues covering the contiguous edges of the connected elements and/or a finishing coating (11) for said upright (1).

10. The assembly according to one of the preceding claims, characterized in that said run channel (6) of mobile window (30) comprises at least two portions (6a, 6b, 6c) cooperating respectively with the upper edge and at least one of the lateral edges of said mobile window (30).

11. The assembly according to one of the preceding claims, characterized in that said run channel (6) comprises a portion (6a) fast with said upright (1).

12. The assembly according to one of the preceding claims, characterized in that said peripheral seal (4) of fixed panel (3) comprises on its outer contour short supple lips (4a) to facilitate assembly and fastening on the rabbet (F) of the door (P), as well as lateral sealing lips (4b).

13. A process for manufacturing an automobile vehicle door trim assembly according to one of the preceding claims, characterize in that at least one lower sealing band (2, 2a, 2b) forming mobile window scraper (30), a mobile window run channel (6) and a peripheral seal (4) possibly tightening on a fixed panel (3) are directly and simultaneously moulded on a fixed mobile window upright, said scraper, said run channel and said peripheral seal being themselves made with a transverse section that is moulded in one piece and that consists of an inside part and an outside part for ensuring sealing and fastening on the door rabbet.

## Patentansprüche

1. Verkleidungs-Baugruppe für Kraftfahrzeugtüren, mit einer sich in Umfangsrichtung erstreckenden Dichtung (4), die eine feste Platte (3) umschließt, welche einerseits mit einer Strebe (1) und andererseits mit einer Führungsschiene (6) für eine bewegliche Glasscheibe und/oder mit wenigstens einem unteren Dichtungsband (2, 2a, 2b) verbunden ist, das eine Wischleiste für die bewegliche Glasscheibe (30) bildet, wobei die Wischleiste, die Führungsschiene und die sich in Umfangsrichtung erstreckende Dichtung selbst in einem Querschnitt einstückig von einem inneren Abschnitt und einem äußeren Abschnitt gebildet sind, die mit Mitteln zum Abdichten gegen und Befestigen am Anschlag versehen sind,
dadurch gekennzeichnet, daß die genannte Baugruppe von einem Stück gebildet ist, das fest und direkt auf und um die genannte Strebe (1) angeformt ist.

2. Baugruppe nach Anspruch 1,
dadurch gekennzeichnet, daß die genannte sich in Umfangsrichtung erstreckende Dichtung (4) der genannten festen Platte (3) an einer ihrer Seiten mit der genannten Strebe (1) fest verbunden ist.

3. Baugruppe nach einem der vorhergehenden Ansprüche,
dadurch gekennzeichnet, daß die genannte Strebe (1) an ihrem unteren Endstück (1a) und eventuell an ihrem oberen Endstück (1b) Lappen (10) zum Befestigen an der Innenwand der Tür (P) aufweist.

4. Baugruppe nach einem der vorhergehenden Ansprüche,
dadurch gekennzeichnet, daß das genannte untere Dichtungsband (2) mit der genannten Dichtung (4) der festen Platte (3) und/oder mit dem unteren Abschnitt der genannten Strebe (1) durch ein elastisches Gelenk (12) verbunden ist.

5. Baugruppe nach einem der vorhergehenden Ansprüche,
dadurch gekennzeichnet, daß sie ein unteres Dichtungsband (2a) zum Anbringen auf der Außenseite des Fahrgastraumes und ein unteres Dichtungsband (2b) zum Anbringen auf der Innenseite des genannten Fahrgastraumes, je bezogen auf die genannte bewegliche Glasscheibe (3), aufweist.

6. Baugruppe nach einem der vorhergehenden Ansprüche,
dadurch gekennzeichnet, daß die genannte Strebe (1) eine feststehende Strebe ist.

7. Baugruppe nach einem der Ansprüche 1 bis 5,
dadurch gekennzeichnet, daß die genannte feste Platte (3) eine Rückspiegelhalterung bildet.

8. Baugruppe nach einem der vorhergehenden Ansprüche,
dadurch gekennzeichnet, daß die genannte feste Platte (3) ein Seitenfenster über einem Hinterrad ist.

9. Baugruppe nach einem der vorhergehenden Ansprüche,
dadurch gekennzeichnet, daß sie außerdem Anschlußabdeckungen (5) aufweist, die von Zungen gebildet sind, welche die aneinanderstoßenden Ränder miteinander verbundener Bauteile und/oder eine Fertigverkleidung (11) für die genannte Strebe (1) bedecken.

10. Baugruppe nach einem der vorhergehenden Ansprüche,
dadurch gekennzeichnet, daß die genannte Führungsschiene (6) der beweglichen Glasscheibe (30) wenigstens zwei Abschnitte (6a, 6b, 6c) aufweist, die mit dem oberen Rand bzw. mit wenigstens einem der Seitenränder der genannten beweglichen Glasscheibe (30) zusammenwirken.

11. Baugruppe nach einem der vorhergehenden Ansprüche,
dadurch gekennzeichnet, daß die genannte Führungsschiene (6) einen mit der genannten Strebe (1) fest verbundenen Abschnitt (6c) aufweist.

12. Baugruppe nach einem der vorhergehenden Ansprüche,
dadurch gekennzeichnet, daß die genannte sich in Umfangsrichtung erstreckende Dichtung (4) der festen Platte (3) entlang ihres äußeren Umfangs weiche kurze Lippen (4a) zum Vereinfachen des Anbringens und Festhaltens am Anschlag (F) der Tür (P) sowie seitliche Dichtungslippen (4b) aufweist.

13. Verfahren zum Herstellen einer Verkleidungs-Baugruppe für Kraftfahrzeugtüren gemäß einem der vorhergehenden Ansprüche,
dadurch gekennzeichnet, daß an eine feste Strebe für eine bewegliche Glasscheibe direkt und gleichzeitig wenigstens ein unteres Dichtungsband (2, 2a, 2b), die eine Wischleiste für die bewegliche Glasscheibe (30) bildet, eine Führungsschiene (6) für die bewegliche Glasscheibe und eine sich in Umfangsrichtung erstreckende Dichtung (4), die eventuell eine feste Platte (3) umschließt, angeformt werden, wobei die genannte Wischleiste, die genannte Führungsschiene und die genannte sich in Umfangsrichtung erstreckende Dichtung selbst mit einem Querschnitt hergestellt werden, der einstückig geformt und mit einem inneren und einem äußeren Abschnitt versehen wird, die zum Abdichten gegen und Befestigen an dem Türanschlag bestimmt sind.
